# EUROPÄISCHE PATENTSCHRIFT

(11) **EP 2 399 848 B1**
(45) Veröffentlichungstag und Bekanntmachung des Hinweises auf die Patenterteilung: **13.02.2013**
(21) Anmeldenummer: 10166789.7
(22) Anmeldetag: 22.06.2010
(51) Int. Cl.: B65G 47/68, B65G 47/71

(54) **Vorrichtung zur Aufteilung eines Förderstroms von aufrecht angeordneten Behältern**
Device for dividing a supply stream of upright containers
Dispositif de répartition d'un flux de récipients agencés verticalement

(43) Veröffentlichungstag der Anmeldung: 28.12.2011
(73) Patentinhaber: UHLMANN PAC-SYSTEME GmbH & Co. KG, 88471 Laupheim (DE)
(72) Erfinder: Regner, Markus, 88456, Muttensweiler (DE); Habdank, Markus, 89079, Ulm (DE); Mauz, Harald, 89584, Ehingen (DE); Kuhnert, Sven, 88471, Laupheim (DE)
(74) Vertreter: Wächter, Jochen

(56) Entgegenhaltungen:
- EP-A1- 0 888 985
- DE-C- 964 847
- DE-C1- 4 337 646
- FR-A1- 2 800 304
- US-A- 2 242 531
- US-A- 2 656 910
- US-A1- 2005 167 239

## Beschreibung

Die Erfindung betrifft eine Vorrichtung zur Aufteilung eines Förderstroms von aufrecht angeordneten Behältern in zwei Teilförderströme, gemäß dem Oberbegriff des Anspruchs 1.

Derartige Vorrichtungen werden auch als "Y-Weiche" bezeichnet und werden beispielsweise in der pharmazeutischen Industrie zur Verteilung von Flaschen, Ampullen oder anderen Behältern verwendet.

Es existiert eine Vielzahl verschiedener Ausführungsformen zum Ausgestalten einer derartigen Vorrichtung zur Aufteilung eines Förderstroms von aufrecht angeordneten Behältern. Viele dieser Vorrichtungen verwenden mechanische Mittel wie drehbare Aufnahmeplatten, in deren Ausnehmungen die Behälter aufgenommen und in den jeweils richtigen Verteilungsstrang abgegeben werden. Derartige Ausgestaltungen sind komplex und für zerbrechliche Behälter in der Regel nicht geeignet.

Bei einer einfachen Ausführungsform der Vorrichtung zur Aufteilung eines Förderstroms von aufrecht angeordneten Behältern werden die Behälter einbahnig durch eine Zuführvorrichtung an die Verteilungsstelle herantransportiert, wo sie sich je nach Staudruck in einen der beiden Verteilungsstränge einordnen. Hierbei kann es jedoch insbesondere bei zerbrechlichen Behältern vorkommen, dass sie sich verkeilen und durch den Druck der nachfolgenden Behälter im Bereich der Übergabestelle zerdrückt werden.

Die US 2 656 910 A1 offenbart eine Vorrichtung zur Aufteilung eines Förderstroms von aufrecht angeordneten und zu befüllenden Blechdosen. Die Vorrichtung umfasst insgesamt drei nebeneinander angeordnete und parallel zueinander verlaufende Förderbänder. Das mittlere Förderband fungiert als eine Zuführvorrichtung zum Herantransportieren des Förderstroms der Blechdosen. Die beiden äußeren Förderbänder fungieren als Verteilungsstränge jeweils zur Aufnahme eines Teilförderstroms der Blechdosen in einem Übergabebereich des mittleren Förderbands. In dem Übergabebereich, der sich zwischen den Verteilungssträngen befindet, ist wiederum eine antreibbare Rolle mit einer im Wesentlichen vertikalen Drehachse, insbesondere zentral, angeordnet.

Die DE 964 847 C1 offenbart eine gattungsgemäße Vorrichtung zur Aufteilung eines einbahnigen Förderstroms von aufrecht angeordneten Behältern in zwei einbahnige Teilförderströme.

Der vorliegenden Erfindung liegt die Aufgabe zugrunde, eine Vorrichtung zur Aufteilung eines Förderstroms von aufrecht angeordneten Behältern zu schaffen, die auch für zerbrechliche Behälter geeignet ist und eine besonders sichere und schnelle Aufteilung des Förderstroms gewährleistet.

Diese Aufgabe wird durch die Merkmale des Anspruchs 1 gelöst.

Die Vorrichtung zur Aufteilung eines einbahnigen Förderstroms von aufrecht angeordneten Behältern in zwei einbahnige Teilförderströme weist eine Zuführvorrichtung zum Herantransportieren des Förderstroms der Behälter und zwei unter einem Winkel zueinander angeordnete Verteilungsstränge auf, die jeweils zur Aufnahme eines Teilförderstroms der Behälter in einem Übergabebereich der Zuführvorrichtung dienen. Erfindungsgemäß ist im Übergabebereich der Zuführvorrichtung zwischen den beiden Verteilungssträngen genau eine antreibbare Rolle mit im wesentlichen vertikaler Drehachse leicht asymmetrisch in Richtung eines der beiden Vertellungsstränge versetzt angeordnet.

Mit dieser Ausgestaltung wird eine einfache, sichere und schnelle Aufteilung des Förderstroms in zwei Teilströme gewährleistet, ohne dass die Gefahr besteht, dass zerbrechliche Behälter zerdrückt werden könnten.

Besonders vorteilhaft ist es, wenn die Rolle leicht nach links versetzt angeordnet ist und eine Drehrichtung im Uhrzeigersinn aufweist, oder wenn die Rolle leicht nach rechts versetzt angeordnet ist und eine Drehrichtung gegen den Uhrzeigersinn aufweist. Auf diese Weise wird eine Vorzugsrichtung des Abtransports der Behälter in Richtung eines Verteiiungsstrangs vorgegeben, während durch den entstehenden Freiraum auch ausreichend Platz für den nächsten nachrückenden Behälter in den jeweils anderen Vertellungsstrang geschaffen wird.

Vorzugsweise weist die Rolle als Material weichen Kunststoff auf, damit auch zerbrechliche Behälter sicher verteilt werden und gleichzeitig eine ausreichende Reibkraft zwischen Rolle und Behälter erzeugt wird.

Zur weiteren Steuerung der Abnahmemenge in jedem der beiden Verteilungsstränge kann jeder Verteilungsstrang eine Transportvorrichtung zum Abtransport der Behälter aufweisen, deren Geschwindigkeit vorzugsweise individuell einstellbar ist. Durch den unterschiedlichen Staudruck in den beiden Verteilungssträngen kann somit auf die Verteilung der Behälter Einfluss genommen werden.

Bevorzugt ist die Summe der Geschwindigkeiten der Transportvorrichtungen der beiden Verteilungsstränge größer als die Geschwindigkeit der Zuführvorrichtung. Dadurch wird der Staudruck in den Verteilungssträngen verringert und die Gefahr eines Zerdrückens von Behältern durch nachfolgende Behälter weiter reduziert.

Weitere Merkmale und Vorteile der vorliegenden Erfindung ergeben sich aus der nachfolgenden Beschreibung unter Bezugnahme auf die Zeichnungen.
- Fig. 1: ist eine Draufsicht auf eine erfindungsgemäße Vorrichtung zur Aufteilung eines Förderstroms von aufrecht angeordneten Behältern mit einer drehbaren Rolle im Übergabebereich; und
- Fig. 2: ist eine schematische Perspektivansicht einer weiteren Ausführungsform der erfindungsgemäßen Vorrichtung zur Aufteilung eines Förderstroms von aufrecht angeordneten Behältern mit einer drehbaren Rolle im Übergabebereich.

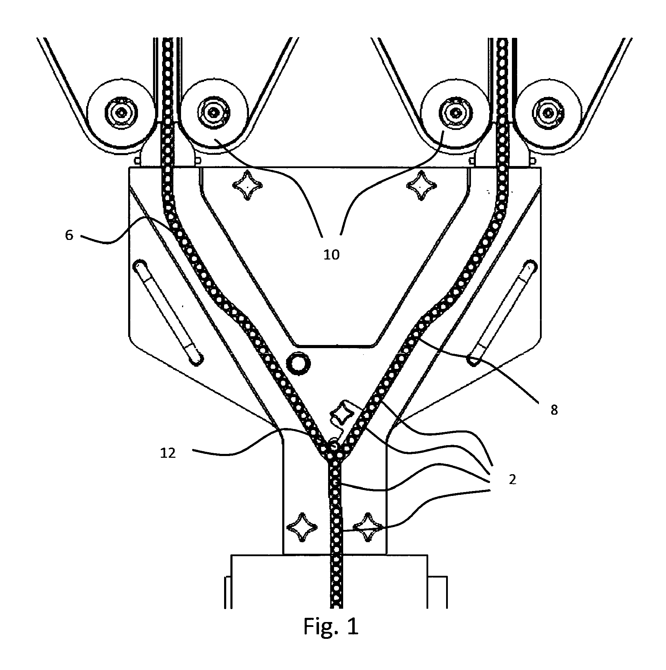

Fig. 1 zeigt den grundsätzlichen Aufbau der erfindungsgemäßen Vorrichtung. Aufrecht angeordnete Behälter 2, wie beispielsweise Flaschen, Ampullen und dergleichen, werden mit hoher Einlaufleistung (z.B. 800 Stück pro Minute) in einem einbahnigen Förderstrom durch eine Zuführvorrichtung 4 herantransportiert. Die Zuführvorrichtung 4 ist üblicherweise als ein Zubringerband ausgestaltet, kann jedoch auch jede andere Fördervorrichtung sein, welche die Behälter 2 kontinuierlich in Richtung eines Übergabebereichs vorwärtsbewegt. Die Behälter 2 sind dabei vorzugsweise eng aneinandergereiht, besonders bevorzugt aneinander anliegend.

Der Förderstrom der Behälter 2 wird in einem Endbereich der Zuführvorrichtung 4, hier Übergabebereich genannt, in zwei Teilförderströme aufgeteilt, welche von zwei unter einem Winkel zueinander angeordneten Verteilungssträngen 6, 8 aufgenommen werden. Die Verteilungsstränge 6, 8 bilden zueinander vorzugsweise einen Winkel von zwischen 30 und 90°, vorzugsweise zwischen 45 und 60° und sind vorzugsweise symmetrisch zu einer Achse angeordnet, welche durch eine gedachte Verlängerung der Zuführvorrichtung 4 gebildet wird. Insgesamt wird auf diese Weise eine Y-förmige Weiche gebildet.

Die in den beiden Verteilungssträngen 6, 8 geförderten Behälter 2 werden vorzugsweise durch eine Transportvorrichtung 10 im jeweiligen Verteilungsstrang 6, 8 abgenommen und mit größerer Geschwindigkeit zur weiteren Verarbeitung bewegt. Die Transportvorrichtung 10 kann beispielsweise als Förderband ausgestaltet sein, auf welchem die Behälter stehen, oder als anderweitiger Fördermechanismus. Die Transportvorrichtung 10 ist im dargestellten Ausführungsbeispiel in einiger Entfernung zum Übergabebereich der Zuführvorrichtung 4 angeordnet, so dass die Behälter 2 zwischen dem Übergabebereich der Zuführvorrichtung 4 und dem Bandantrieb 10 jeweils nur durch den Staudruck der von hinten nachgeförderten Behälter 2 in den Verteilungssträngen 6, 8 vorwärts bewegt werden. Ebenso kann der Bandantrieb 10 jedoch näher am Übergabebereich der Zuführvorrichtung 4, also der Aufteilungsstelle, angeordnet sein, und es kann auch ein zusätzlicher Antrieb dazwischen integriert werden.

Im Bereich der Aufteilungsstelle des Förderstroms in die beiden Teilförderströme, genauer im Winkelbereich zwischen den beiden Verteilungssträngen 6, 8 und unmittelbar am Ende der Zuführvorrichtung 4, ist eine drehbare Rolle 12 angeordnet, welche eine im wesentlichen vertikale Drehachse aufweist. Üblicherweise wird die Rolle 12 mittels eines Servomotors angetrieben.

Mit der Rolle 12 wird einem Bruch von Behältern 2 an der Verteilungsstelle von vornherein effektiv entgegengewirkt. Die Rolle 12 verhindert, dass sich die Behälter 12 an der "Y-Kreuzung" der Weiche aufstauen. Die Rolle 12 besteht vorzugsweise aus einem weichen Kunststoff oder Gummi mit einem Metallkern bzw. nur aus Metall und dreht sich vorzugsweise mit einer Geschwindigkeit, die höher ist als die Fördergeschwindigkeit der Behälter 2 in der Zuführvorrichtung 4. Aufgrund der Reibungskraft zwischen der Rolle 12 und den Behältern 2 werden diese unmittelbar bei Auftreffen auf die Rolle 12 in Drehrichtung der Rolle 12 weiterbewegt und damit in Richtung eines der beiden Verteilungsstränge 6, 8 verschoben. Wenn über die nachgeschaltete Transportvorrichtung 10 in den Verteilungssträngen 6, 8 keine anderweitige Einstellung vorgenommen wird, also in beiden Verteilungssträngen 6, 8 die Bandantriebe 10 mit derselben Geschwindigkeit laufen, wird aufgrund des höheren Staudrucks in dem Verteilungsstrang 6, 8, in den der vorherige Behälter 2 durch die Rolle 12 hineingeschoben wurde, der nachfolgende Behälter 2 in den jeweils anderen Verteilungsstrang 6, 8 ausweichen.

Die Rolle 12 dient also dazu, den Behältern 2 eine Bewegungstendenz in eine Vorzugsrichtung zu verleihen, wodurch auch für nachfolgende Behälter 2 wieder ein Freiraum in der jeweils anderen Richtung entsteht, in den sich dieser Behälter 2 dann bewegen kann.

Es existieren mehrere Möglichkeiten zur Ausgestaltung und Anordnung der Rolle 12.

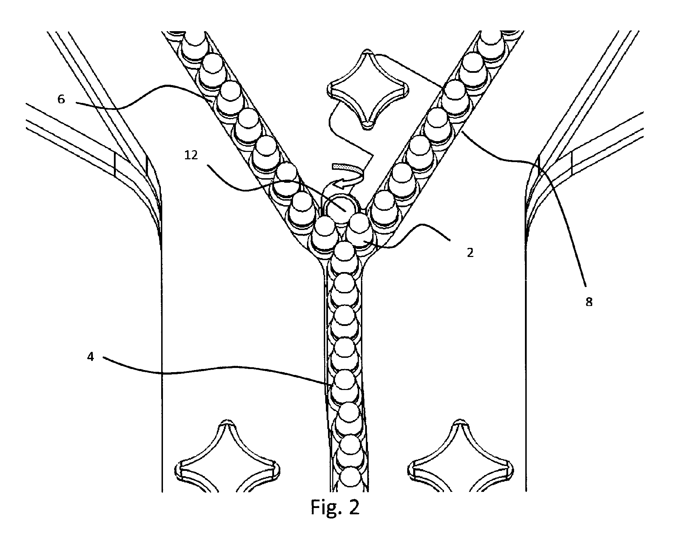

In Fig. 2 ist eine Ausführungsform dargestellt, in der die Rolle 12 mit einer vorgegebenen Drehrichtung im Uhrzeigersinn vorgesehen ist. Die Rolle 12 ist in diesem Ausführungsbeispiel verglichen mit der Symmetrieachse der Weiche, also der gedachten Verlängerung der Transportrichtung der Behälter 2 in der Zuführvorrichtung 4, leicht nach links versetzt. Dadurch wird zum einen der linke Verteilungsstrang 6 aufgrund der Drehrichtung der Rolle 12 im Uhrzeigersinn als Vorzugsrichtung definiert, andererseits bleibt für jeden zweiten Behälter 2 ein etwas größerer Platz zur Rolle 12, um in den rechten Verteilungsstrang 8 auszuweichen, ohne die Rolle 12 zu berühren. Auf diese Weise wird die gleichmä-βige Verteilung der Behälter 2 in die beiden Verteilungsstränge 6, 8 optimiert.

Der umgekehrte Effekt wird erzielt, wenn die Rolle 12 leicht nach rechts versetzt angeordnet ist und gegen den Uhrzeigersinn angetrieben ist.

Die Rolle 12 kann sich über eine beträchtliche Höhe erstrecken, d.h. Walzenform annehmen, um auch größere Behälter 2 sicher leiten zu können.

Durch die nachgeschalteten Transportvorrichtungen 10 kann die Abnahmemenge der Behälter 2 in den beiden Verteilungssträngen 6, 8 zusätzlich gesteuert werden. Die eingestellte Abnahmemenge beider Transportvorrichtungen 10 sollte addiert mehr als 100 % der Liefermenge an Behältern 2 durch die Zuführvorrichtung 4 ergeben, um einem Bruch von Behältern 2 noch stärker vorzubeugen.

Durch variables Einstellen der Abnahmemenge der beiden Transportvorrichtungen 10 kann der Staudruck in den beiden Verteilungssträngen 6, 8 eingestellt werden. Jeder Behälter 2, der an die Verteilungsstelle gelangt, wird automatisch den Weg des geringsten Widerstandes nehmen und damit in denjenigen Verteilungsstrang 6, 8 eintreten, in welchem der Staudruck geringer ist. Mittels der Einstellung der Geschwindigkeit der nachgeschalteten Transportvorrichtungen 10 kann also auch eine ungleichmäßige Aufteilung der Anzahl von Behältern 2 auf die beiden Verteilungsstränge 6, 8 erzielt werden.

In der Grundausführung kann eine Gleichverteilung auf beide Verteilungsstränge 6, 8 auf einfache und besonders sichere Weise unter Einsatz einer Rolle 12 erzielt werden, da durch die angetriebene Rolle 12 bereits ein Stau der Behälter 2 an der Verteilungsstelle verhindert wird.

## Patentansprüche

1. Vorrichtung zur Aufteilung eines Förderstroms von aufrecht angeordneten Behältern (2) in zwei Teilförderströme, mit
einer Zuführvorrichtung (4) zum Herantransportieren des Förderstroms der Behälter (2); und
zwei unter einem Winkel zueinander angeordneten Verteilungssträngen (6, 8), die jeweils zur Aufnahme eines Teilförderstroms der Behälter (2) in einem Übergabebereich der Zuführvorrichtung (4) dienen, wobei im Übergabebereich der Zuführvorrichtung (4) zwischen den beiden Verteilungssträngen (6, 8) eine antreibbare Rolle (12) mit im wesentlichen vertikaler Drehachse angeordnet ist;
wobei
sowohl der Förderstrom der Zuführvorrichtung (4) als auch die Teilförderströme der Verteilungsstränge (6, 8) einbahnig sind und die Vorrichtung eine Y-förmige Weiche bildet,
**dadurch gekennzeichnet, dass**
die genau eine Rolle (12) leicht asymmetrisch in Richtung eines der beiden Verteilungsstränge (6, 8) versetzt angeordnet ist.

2. Vorrichtung nach Anspruch 1, **dadurch gekennzeichnet, dass** die Rolle (12) leicht nach links versetzt angeordnet ist und eine Drehrichtung im Uhrzeigersinn aufweist oder die Rolle (12) leicht nach rechts versetzt angeordnet ist und eine Drehrichtung gegen den Uhrzeigersinn aufweist.

3. Vorrichtung nach Anspruch 1 oder 2, **dadurch gekennzeichnet, dass** jeder Verteilungsstrang (6, 8) eine Transportvorrichtung (10) zum Abtransport der Behälter (2) aufweist.

4. Vorrichtung nach Anspruch 3, **dadurch gekennzeichnet, dass** die Summe der Geschwindigkeiten der Transportvorrichtungen (10) der beiden Verteilungsstränge (6, 8) größer ist als die Geschwindigkeit der Zuführvorrichtung (4).

5. Vorrichtung nach Anspruch 3 oder 4, **dadurch gekennzeichnet, dass** die Geschwindigkeit jeder Transportvorrichtung (10) individuell einstellbar ist.

6. Vorrichtung nach einem der vorangehenden Ansprüche, **dadurch gekennzeichnet, dass** die Rolle (12) aus Metall besteht.

## Claims

1. Device for dividing a transport stream of upright containers (2) into two partial transport streams, comprising:
a feed device (4) for conveying the transport stream of containers (2); and
two distribution lines (6, 8) arranged at an angle to each other, each of which is used to receive a partial transport stream of containers (2) in a transfer region of the feed device (4), a driven roller (12) having a substantially vertical axis of rotation being arranged between the two distribution lines (6, 8) in the transfer region of the feed device (4); both the transport stream of the feed device (4) and the partial transport streams of the distribution lines (6, 8) being on a single track and the device forming a Y-shaped intersection, **characterised in that** the precisely one roller is slightly offset asymmetrically towards one of the two distribution lines (6, 8).

2. Device according to claim 1, **characterised in that** the roller (12) is slightly offset to the left and has a clockwise direction of rotation, or the roller (12) is slightly offset to the right and has a counterclockwise direction of rotation.

3. Device according to either claim 1 or claim 2, **characterised in that** each distribution line (6, 8) comprises a transport device (10) for transporting the containers (2) away.

4. Device according to claim 3, **characterised in that** the sum of the speeds of the transport devices (10) of the two distribution lines (6, 8) is greater than the speed of the feed device (4).

5. Device according to either claim 3 or claim 4, **characterised in that** the speed of each transport device (10) is individually adjustable.

6. Device according to any of the preceding claims, **characterised in that** the roller (12) is made of metal.

## Revendications

1. Dispositif de répartition d'un flux de transport de récipients (2) disposés verticalement en deux flux de transport partiels, comprenant
un dispositif d'alimentation (4) pour l'arrivée du flux de transport des récipients (2) ; et
deux lignes de répartition (6, 8), disposées sous un angle mutuel, qui servent chacune à recevoir un flux de transport partiel des récipients (2) dans une zone de transfert du dispositif d'alimentation (4), un rouleau entraînable (12), avec un axe de rotation essentiellement vertical, étant disposé entre les deux lignes de répartition (6, 8) dans la zone de transfert du dispositif d'alimentation (4) ;
aussi bien le flux de transport du dispositif d'alimentation (4) que les flux partiels de transport des lignes de répartition (6, 8) étant à voie unique et le dispositif formant un aiguillage en Y,
**caractérisé en ce que**
le exactement un rouleau (12) est disposé en déport, de façon légèrement asymétrique, en direction de l'une des deux lignes de répartition (6, 8).

2. Dispositif selon la revendication 1, **caractérisé en ce que** le rouleau (12) est disposé en léger déport vers la gauche et présente un sens de rotation dans celui des aiguilles d'une montre, ou le rouleau (12) est disposé en léger déport vers la droite et présente un sens de rotation contraire à celui des aiguilles d'une montre.

3. Dispositif selon l'une des revendications 1 et 2, **caractérisé en ce que** chaque ligne de répartition (6, 8) présente un dispositif de transport (10) pour l'évacuation des récipients (2).

4. Dispositif selon la revendication 3, **caractérisé en ce que** la somme des vitesses des dispositifs de transport (10) des deux lignes de répartition (6, 8) est plus élevée que la vitesse du dispositif d'alimentation (4).

5. Dispositif selon l'une des revendications 3 et 4, **caractérisé en ce que** la vitesse de chaque dispositif de transport (10) est réglable individuellement.

6. Dispositif selon l'une des revendications précédentes, **caractérisé en ce que** le rouleau (12) se compose de métal.
